# EUROPÄISCHE PATENTANMELDUNG

(11) **EP 2 073 090 A2**
(43) Veröffentlichungstag der Anmeldung: **24.06.2009**
(21) Anmeldenummer: 08020496.9
(22) Anmeldetag: 26.11.2008
(51) Int. Cl.: G05D 16/20

(54) **Gasventilanordnung**

(30) Priorität: 20.12.2007 DE 102007061844
(71) Anmelder: Howaldtswerke-Deutsche Werft GmbH, 24143 Kiel (DE)
(72) Erfinder: Büchner, Richard, 23611 Bad Schwartau (DE)
(74) Vertreter: Vollmann, Heiko

(57) **Zusammenfassung**

Eine Gasventilanordnung zum Einstellen und Regeln eines Drucks eines an der Gasventilanordnung angeschlossenen Raumes weist ein mittels eines Absperrventils (10) abschließbaren Strömungseinlass (4) auf. Das Absperrventil (10) ist von einem Gasdruckfederelement (16) gesteuert. Hierbei ist eine Regeleinrichtung (40) vorgesehen, die den Gasdruck des Gasdruckfederelements (16) steuert.

## Beschreibung

Die Erfindung betrifft eine Gasventilanordnung zum Einstellen und Regeln eines Drucks eines an der Gasventilanordnung angeschlossenen Raumes.

Eine solche Gasventilanordnung ist aus DE 197 82 256 C2 bekannt. Dort ist ein pneumatischer Regler beschrieben, der einen von einem Hauptventil abgelassenen Ablassdruckwert auf einen festgelegten Druckwert regelt, indem ein Pilotdruck in Reaktion auf einen von einem Magnetventil zugeführtes Gas eingestellt wird.

In Unterseebooten ist es zu unterschiedlichen Zwecken erforderlich, in einem Druckspeicher gespeichertes Gas, z. B. Luft, von dem Druckspeicher in ein an diesem angeschlossenes System zu speisen, wobei der Druck des Gases in dem System auf einen vorgegebenen Sollwert eingestellt und auf diesem Sollwert gehalten werden muss. Ein Beispiel hierfür ist das zum Anpassen des Gewichts (Regeln) durchgeführte Anblasen der Regelzellen, bei dem Druckgas aus einem Druckspeicher in die zunächst mit Wasser gefüllten Regelzellen geleitet wird, um das Wasser aus den Regelzellen zu verdrängen. Das Einleiten des Druckgases in die Regelzelle erfolgt durch Öffnen eines zwischen dem Druckspeicher und der Regelzelle angeordneten hand- oder elektrisch betätigbaren Absperrventils. Darüber hinaus verfügt die Regelzelle über einen Gasauslass, der ebenfalls von einem hand- oder elektrisch betätigbaren Absperrventil verschlossen wird. Das Einstellen des in der Regelzelle geforderten Solldrucks erfolgt mittels einer elektronischen Steuerung, die den Gasdruck in der Regelzelle überwacht und bei einem zu niedrigen Gasdruck in der Regelzelle das eingangsseitig der Regelzelle angeordnete Absperrventil öffnend schaltet und bei einem zu hohen Gasdruck das ausgangsseitig der Regelzelle angeordnete Absperrventil öffnend schaltet. Diese Art der Druckeinstellung in einem an einem Druckgasspeicher angeschlossenen System ist anlagentechnisch sehr aufwändig und hat den großen Nachteil, dass sie bei einem Ausfall der elektronischen Steuerung überhaupt nicht mehr möglich ist.

Die Aufgabe der Erfindung ist es, eine Gasventilanordnung zu schaffen, mit der der Druck mit einem an der Gasventilanordnung angeschlossenen Raum zuverlässig eingestellt werden kann und bei möglichst kleinen Regelabweichungen geregelt werden kann.

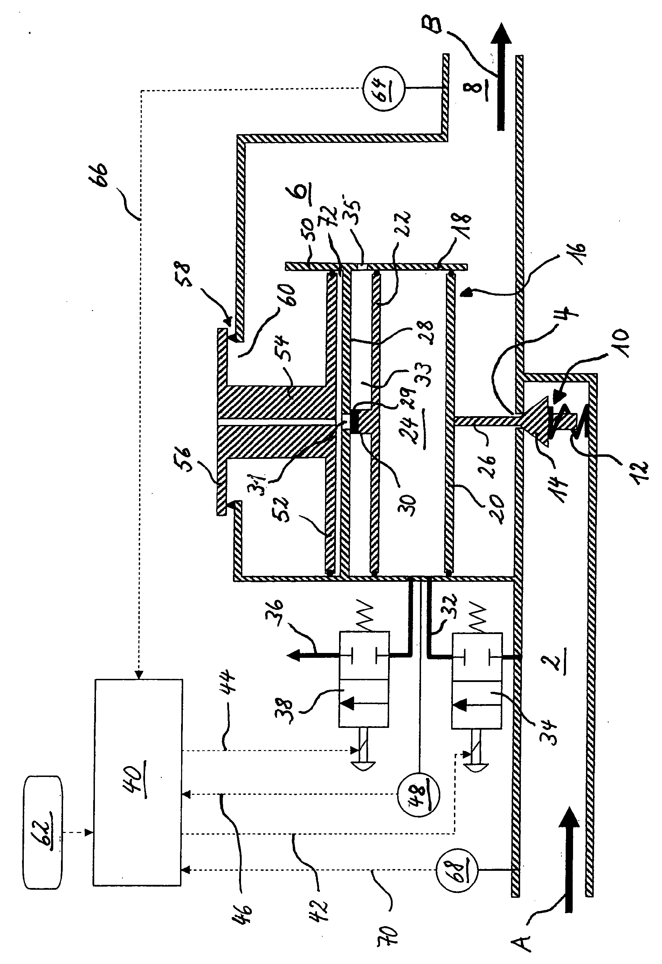

Gelöst wird diese Aufgabe durch eine Gasventilanordnung mit den in Anspruch 1 angegebenen Merkmalen. Vorteilhafte Weiterbildungen der Erfindung ergeben sich aus den Unteransprüchen, der nachfolgenden Beschreibung sowie der Zeichnung.

Die erfindungsgemäße Gasventilanordnung dient zum Einstellen und Regeln eines an der Gasventilanordnung angeschlossenen Raumes, wobei unter Raum im Sinne der Erfindung sowohl ein Behälter als auch ein Leitungssystem zu verstehen ist. Die Gasventilanordnung weist einen Strömungseinlass auf, der mittels eines Absperrventils abschließbar ist. Dieses Absperrventil ist von einem Gasdruckfederelement gesteuert, wobei eine Regeleinrichtung vorgesehen ist, die den Gasdruck des Gasdruckfederelements steuert.

Das Gasdruckfederelement ist Teil eines mechanischen Druckreglers, der in einer Leitungsverbindung zwischen dem Strömungseinlass und dem zu bedruckenden Raum angeordnet ist. Hierbei ist eine Druckkammer des Gasdruckfederelements mit dem ausgangsseitig der Gasventilanordnung einzustellenden Solldruck beaufschlagt. Ein die Druckkammer begrenzender, beweglicher Teil des Gasdruckfederelements ist darüber hinaus an seiner Außenseite mit dem ausgangsseitig der Gasventilanordnung herrschenden tatsächlichen Druck beaufschlagt. Mit diesem beweglichen Teil des Gasdruckfederelements ist ein Schließkörper des Absperrventils derart bewegungsgekoppelt, dass er dann, wenn der tatsächliche Druck kleiner als der geforderte Solldruck ist, in eine den Strömungseinlass freigebende Stellung bewegt wird. Sobald der Istdruck gleich dem geforderten Solldruck ist, wird der Schließkörper in eine den Strömungseinlass verschließende Stellung bewegt.

Grundsätzlich kann der eingangsseitig der Gasventilanordnung anliegende Druck allein mit diesem mechanischen Druckregler auf einen ausgangsseitig der Gasventilanordnung geforderten Sollwert geregelt werden, allerdings sind die Regelabweichungen bei dieser Druckregelung verhältnismäßig groß, auch kann der Sollwert nicht verändert werden. Erfindungsgemäß ist daher eine Regeleinrichtung, vorzugsweise in Form einer elektronischen Steuer- und Regeleinrichtung, vorgesehen, die den Gasdruck in der Druckkammer unter Erfassung des tatsächlichen Istdrucks ausgangsseitig der Gasventilanordnung derart steuert, dass die ansonsten auftretenden Regelabweichungen korrigiert werden, bzw. der Sollwert verändert wird

Auf diese Weise ermöglicht die erfindungsgemäße Gasventilanordnung eine Druckregelung mit sehr hoher Regelgenauigkeit. Ein weiterer Vorteil der hier vorgestellten Gasventilanordnung ist es, dass sie in schneller und einfacher Weise an unterschiedliche Druckregelaufgaben angepasst werden kann. Hierzu weist die Regeleinrichtung zweckmäßigerweise eine Eingabeeinheit z. B. in Form einer Tastatur auf, über die der ausgangsseitig der Gasventilanordnung geforderte Solldruck eingegeben werden kann. Auf Grundlage dieses Solldrucks kann der entsprechende Gasdruck des Gasdruckfederelements von der Regeleinrichtung beispielsweise über eine dort abgelegte Software ermittelt werden und anschließend durch eine Druckminderung oder Druckerhöhung in der Druckkammer eingestellt werden.

Zu diesem Zweck weist das Gasdruckfederelement vorteilhaft einen an einer Gasdruckquelle angeschlossenen Gaseinlass und einen in die Umgebung der Gasventilanordnung mündenden Gasauslass auf, wobei sowohl an dem Gaseinlass als auch an dem Gasauslass ein von der Regeleinrichtung betätigtes Absperrventil angeordnet ist. Soll an der Gasventilanordnung ein höherer Ausgangsdruck eingestellt werden oder erfordert die Regelung des Ausgangsdruckes einen höheren Gasdruck des Gasdruckfederelements, veranlasst die Regeleinrichtung ein Öffnen des an dem Gaseinlass angeordneten Absperrventils. Hierdurch kann zusätzliches Druckgas von der Druckgasquelle in die Druckkammer des Gasdruckfederelements strömen und dort den Gasdruck erhöhen. In umgekehrter Weise kann der Gasdruck des Gasdruckfederelements von der Regeleinrichtung gesenkt werden, indem sie das an dem Gasauslass angeordnete Absperrventil öffnend ansteuert, so dass Druckgas aus der Druckkammer des Gasdruckfederelements abgegeben wird, wodurch der Gasdruck in der Druckkammer gemindert wird.

Der Gaseinlass des Gasdruckfederelements kann an einer separaten Druckgasquelle angeschlossen sein. Eine solche zusätzliche Druckgasquelle ist aber insbesondere dann ungünstig, wenn die Gasventilanordnung unter beengten Raumverhältnissen, beispielsweise in einem Unterseeboot, eingesetzt wird. Bevorzugt bildet daher der Strömungseinlass der erfindungsgemäßen Gasventilanordnung die an dem Gaseinlass des Gasdruckfederelements angeschlossene Druckgasquelle. Das heißt, der Gaseinlass des Gasdruckfederelements ist eingangsseitig des Absperrventils, das den Strömungseinlass der Gasventilanordnung verschließt, an dem Strömungseinlass angeschlossen.

In einer besonders vorteilhaften Ausgestaltung weist die erfindungsgemäße Gasventilanordnung ein vorzugsweise zur Umgebung der Gasventilanordnung öffnendes Gasablassventil auf, das mit dem Strömungsauslass leitungsverbunden ist. Dementsprechend kann ein ausgangsseitig der Gasventilanordnung angeordneter Raum von diesem nicht nur mit einem Gas befüllt werden, sondern es kann auch Gas über das Gasablassventil aus diesem Raum abgelassen werden bzw. der Gasdruck in diesem Raum gesenkt werden. Das Gasablassventil ist vorteilhafterweise von dem Gasdruckfederelement gesteuert. Demzufolge ist das Gasdruckfederelement in zwei Richtungen wirkend ausgebildet, wobei es in einer ersten Wirkrichtung das den Strömungseinlass verschließende Absperrventil steuert und in einer zweiten, entgegengesetzten Wirkrichtung das Gasablassventil steuert.

Eine erste Kolben-Zylinder-Anordnung bildet das Gasdruckfederelement. Hierbei ist bevorzugt zumindest ein in einem Zylinder beweglich geführter erster Kolben vorgesehen, der eine Zylinderkammer, die die Druckkammer des Gasdruckfederelements bildet, begrenzt. Mit diesem Kolben ist das den Strömungseinlass verschließende Absperrventil z. B. mittels einer Kolbenstange bewegungsgekoppelt, indem der Gasdruck des Gasdruckfederelements auf eine Kolbenfläche des ersten Kolbens wirkt.

Besonders vorteilhaft ist die Kolben-Zylinder-Anordnung derart ausgebildet, dass in einem Zylinder zwei einander gegenüberliegend angeordnete Kolben beweglich geführt sind. Bei dieser Ausgestaltung kann ein erster Kolben mit dem den Strömungseinlass verschließenden Absperrventil bewegungsgekoppelt sein und ein zweiter Kolben mit dem Gasablassventil bewegungsgekoppelt sein, so dass sowohl das den Strömungseinlass verschließende Absperrventil als auch das Gasablassventil von der Kolben-Zylinder-Anordnung gesteuert werden können.

In einer bevorzugten Weiterbildung ist eine zweite Kolben-Zylinder-Anordnung vorgesehen, mit der ein Schließkörper des Gasablassventils bewegungsgekoppelt ist, wobei der Zylinder dieser Kolben-Zylinder-Anordnung einen Strömungseinlass aufweist, der mit einem mit dem Gasdruckfederelement bewegungsgekoppelten Schließkörper verschließbar ist. Hierbei ist der Schließkörper des Gasablassventils bevorzugt an einer Kolbenstange eines in dem Zylinder der zweiten Kolben-Zylinder-Anordnung beweglich geführten Kolbens befestigt und mit diesem Kolben in eine das Gasablassventil öffnende und eine das Gasablassventil schließende Stellung bewegbar. In üblicher Weise bilden Kolben und Zylinder eine Druckkammer, in der typischerweise der Strömungseinlass des Zylinders mündet. In der Schließstellung des Gasablassventils ist dieser Strömungseinlass von dem mit dem Gasdruckfederelement bewegungsgekoppelten Schließkörper verschlossen. Ansonsten ist der Strömungseinlass des Zylinders mit dem Strömungsauslass der Gasventilanordnung leitungsverbunden, so dass Gas von dem Strömungsauslass der Gasventilanordnung in die Druckkammer der zweiten Kolben-Zylinder-Anordnung strömen kann, wodurch der Kolben dieser Kolben-Zylinder-Anordnung mit dem Schließkörper des Gasauslassventils in eine dieses Ventil öffnende Stellung bewegt wird.

Zur Ermittlung einer Regelabweichung ist zweckmäßigerweise an dem Strömungsauslass der Gasventilanordnung ein Drucksensor angeordnet, der mit der Regeleinrichtung signalverbunden ist. Darüber hinaus kann vorzugsweise auch an dem Strömungseinlass der Gasventilanordnung ein mit der Regeleinrichtung signalverbundener Drucksensor angeordnet sein. Mit diesem weiteren Drucksensor kann ein Druckabfall eingangsseitig der Gasventilanordnung ermittelt werden und von der Regeleinrichtung durch entsprechende Steuerung des Gasdrucks in dem Gasdruckfederelement kompensiert werden.

Weiter vorteilhaft sind die an dem Gaseinlass und Gasauslass des Gasdruckfederelements angeordneten Absperrventile sowohl elektrisch als auch manuell betätigbar. So können diese Absperrventile im Normalfall von einer elektronischen Steuer- und Regeleinrichtung gestellt werden und bei einem eventuellen Ausfall der elektronischen Steuer- und Regeleinrichtung per Hand gestellt werden.

Bevorzugt ist die erfindungsgemäße Gasventilanordnung zum Einsatz in einem Unterseeboot vorgesehen, wobei vorteilhaft ausgangsseitig der Gasventilanordnung eine Regelzelle angeschlossen ist. In diesem Fall ist die Gasventilanordnung zwischen einem Druckgastank und der Regelzelle angeordnet. Die Gasventilanordnung dient zum kontrollierten Anblasen der Regelzelle mit Druckgas. Des Weiteren ist die Gasventilanordnung vorteilhafterweise auch zum Fluten der Regelzelle vorgesehen, wobei das zuvor in der Regelzelle befindliche Druckgas über das Gasablassventil der Gasventilanordnung abgelassen werden kann.

Nachfolgend ist die Erfindung anhand eines in der Zeichnung dargestellten Ausführungsbeispiels näher erläutert. Die Zeichnung zeigt in einer schematischen Prinzipskizze eine Gasventilanordnung gemäß der Erfindung im Schnitt.

Die dargestellte Gasventilanordnung weist eine Zuführleitung 2 auf, über die Druckgas eines nicht dargestellten Druckgasspeichers in Strömungsrichtung A einströmen kann. Die Zuführleitung 2 mündet in einem Strömungseinlass 4 eines Ventilgehäuses 6. An dem Ventilgehäuse 6 ist ein Strömungsauslass 8 ausgebildet, über den das Druckgas in Strömungsrichtung B in einem nicht dargestellten Raum, z. B. einen Behälter oder ein Leitungssystem, abströmen kann. Der Strömungseinlass 4 wird von einem Absperrventil 10 verschlossen, wobei eine sich gegenüber des Strömungseinlasses 4 an der Zuführleitung 2 abstützende Feder 12 einen Schließkörper 14 des Absperrventils 10 in eine den Strömungseinlass 4 verschließende Stellung drückt.

In dem Ventilgehäuse 6 ist achsgleich des Strömungseinlasses 2 ein Gasdruckfederelement 16 angeordnet. Dieses Gasdruckfederelement 16 wird von einer Kolben-Zylinder-Anordnung gebildet, bei der in einem Zylinder 18 ein erster Kolben 20 sowie ein diesem Kolben 20 gegenüberliegend angeordneter zweiter Kolben 22 beweglich geführt sind. Zwischen den Kolben 20 und 22 befindet sich eine mit Druckgas gefüllte Druckkammer 24 des Gasdruckfederelements 16.

An seiner von der Druckkammer 24 abgewandten Außenseite weist der Kolben 20 eine Kolbenstange 26 auf, an deren Ende der Schließkörper 14 des Absperrventils 10 angeordnet ist. Auf diese Weise ist der Schließkörper 14 mit dem Kolben 20 bewegungsgekoppelt. An der von der Druckkammer 24 abgewandten Außenseite des Kolbens 22 ist der Zylinder 18 durch eine Wand 28 begrenzt. In dem in der Zeichnung dargestellten Zustand der Gasventilanordnung stützt sich der Kolben 22 über einen bezogen auf die Druckkammer 24 nach außen weisenden Vorsprung 30, dessen Ende von einem Schließkörper 29 gebildet wird, an dieser Wand 28 ab, wobei der Schließkörper 29 eine in der Wand 28 ausgebildete Öffnung 31 verschließt. Der Vorsprung 30 schafft zwischen dem Kolben 22 und der Wand 28 eine Kammer 33, in die das in dem Ventilgehäuse 6 befindliche Druckgas über eine an dem Zylinder 18 ausgebildete Öffnung 35 einfließen kann.

Die Druckgasbefüllung der Druckkammer 24 des Gasdruckfederelements 16 erfolgt über einen Gaseinlass durch eine Leitung 32, die die Druckkammer 24 mit der in der Zuführleitung 2 verbindet. In der Leitung 32 ist ein Absperrventil 34 angeordnet. Hierbei handelt es sich um ein elektrisch gesteuertes 2/2-Wegeventil, das auch manuell betätigbar ist. Darüber hinaus weist die Druckkammer 24 des Gasdruckfederelements 16 einen Gasauslass auf, der über eine in der Umgebung der Gasventilanordnung mündende Leitung 36 angeschlossen ist, die mit einem Absperrventil 38 verschließbar ist. Das Absperrventil 38 ist ebenfalls als ein sowohl manuell als auch elektrisch betätigbares 2/2-Wegeventil ausgebildet.

Der Gasdruck des Gasdruckfederelements 16, d. h. der Gasdruck in der Druckkammer 24 des Gasdruckfederelements 16, wird von einer Regeleinrichtung in Form einer elektronischen Steuer- und Regeleinrichtung 40 gesteuert. Zu diesem Zweck sind das Absperrventil 34 über eine Signalleitung 42 und das Absperrventil 38 über eine Signalleitung 44 mit der elektronischen Steuer- und Regeleinrichtung 40 signalverbunden. Außerdem ist die Steuer- und Regeleinrichtung 40 über eine Signalleitung 46 mit einem Drucksensor 48 zur Erfassung des Gasdrucks in der Druckkammer 24 signalverbunden.

Die den Zylinder 8 begrenzende Wand 28 ist Teil eines Zylinders 50 einer zweiten Kolben-Zylinder-Anordnung, die in dem Gehäuse 6 angeordnet ist. In dem Zylinder 50 ist ein Kolben 52 beweglich geführt. Der Kolben 52 weist an seiner von der Wand 28 abgewandten Seite eine Kolbenstange 54 auf, deren Ende einen Schließkörper 56 eines Gasablassventils 58 trägt. Der Schließkörper 56 verschließt eine an dem Gehäuse 6 ausgebildete Gasablassöffnung 60.

Die Funktionsweise der Gasventilanordnung ist wie folgt: Um einen ausgangsseitig des Strömungsauslasses 8 angeschlossenen Raum, z. B. eine Regelzelle mit Druckgas mit einem vorgegebenen Solldruck zu befüllen, wird dieser Solldruck zunächst in einer mit der elektronischen Steuer- und Regeleinrichtung 40 signalverbundenen Eingabeeinheit 62 eingegeben. Daraufhin veranlasst die Steuer- und Regeleinheit 40 die Druckbeaufschlagung der Druckkammer 24 des Gasdruckfederelements 16 mit einem entsprechenden Druck. Hierzu wird das Absperrventil 34 solange von der Steuer- und Regeleinrichtung 40 öffnend geschaltet, bis in der Druckkammer 24 der entsprechende Druck herrscht. Hierdurch expandiert das Volumen der Druckkammer 24, wodurch der Kolben 20 in Richtung des Strömungseinlass 4 bewegt wird. Auf diese Weise wird der Schließkörper 14 des Absperrventils 10 in eine den Strömungseinlass 4 freigebende Stellung bewegt, so dass Druckgas in das Ventilgehäuse 6 und über den Strömungsausgang 8 in den daran angeschlossenen Raum strömen kann. Durch das einströmende Gas erhöht sich der Druck in dem Ventilgehäuse 6. Entsprechend wird auch die dem Strömungseinlass 4 zugewandte Außenseite des Kolbens 20 mit dem steigenden Druck beaufschlagt. Sobald der in dem Ventilgehäuse 6 herrschende Gasdruck den Gasdruck in der Druckkammer 24 übersteigt, wird der Kolben 20 wieder zurück in eine Stellung bewegt, in der der Schließkörper 14 des Ventils 10 den Strömungseinlass 4 verschließt, so dass kein weiteres Druckgas in den mit Druckgas zu befüllenden Raum fließen kann. Während des beschriebenen Befüllens dieses Raumes mit Druckgas wird der tatsächlich an dem Strömungsausgang 8 herrschende Druck von einem Drucksensor 64 überwacht und die Druckwerte über eine Signalleitung 66 an die Steuer- und Regeleinrichtung 40 weitergeleitet. In der Steuer- und Regeleinrichtung 40 werden die von dem Drucksensor 64 ermittelten Druckwerte mit dem Sollwert verglichen, wobei die Steuer- und Regeleinrichtung 40 den Gasdruck in der Druckkammer 24 bei zu großen Regelabweichungen korrigierend nachsteuert. In ähnlicher Weise ermittelt ein über eine Signalleitung 70 mit der Steuer- und Regelungseinrichtung 40 verbundener Drucksensor 68 in der Zuführleitung 2 den Eingangsdruck vor dem Strömungseinlass 4, um Änderungen des Eingangsdruck ebenfalls durch eine korrigierende Steuerung des Gasdrucks in der Druckkammer 24 des Gasdruckfederelements 16 auszugleichen.

Soll der Druck in einem an der Gasventilanordnung angeschlossenen Raum verringert werden, steuert die Steuer- und Regeleinrichtung 40 nach Eingabe des gewünschten Druckwertes über die Eingabeeinheit 62 das Absperrventil 38 öffnend an. Auf diese Weise kann Gas aus der Druckkammer 24 über die Leitung 36 in die Umgebung der Gasventilanordnung abströmen. In der Druckkammer 24 verringert sich der Gasdruck und damit einhergehend das Volumen dieser Druckkammer 24, indem sich der Kolben 22 in Richtung des Kolbens 20 bewegt. Hierdurch gibt der an dem Vorsprung 30 angeordnete Schließkörper 29 die an der Wand 28 ausgebildete Öffnung 31 frei. Das Gas kann nun von dem an die Gasventilanordnung angeschlossenen Raum über das Ventilgehäuse 6 und die Öffnung 35 in die Kammer 33 strömen, von wo es in einen Zwischenraum 72 zwischen der Wand 28 und dem Kolben 52 gelangt. Hierdurch wird der Kolben 52 von der Wand 28 weg bewegt, so dass der Schließkörper 56 die an dem Ventilgehäuse 6 ausgebildete Gasablassöffnung 60 freigibt. Nun strömt Gas aus dem an der Gasventilanordnung angeschlossenen Raum über das Ventilgehäuse 6 und die Gasablassöffnung 60 in die Umgebung der Gasventilanordnung. Dies geschieht solange, bis der Druck in dem an der Gasventilanordnung angeschlossenen Raum dem eingestellten Solldruck entspricht. Ist dies der Fall befinden sich der Gasdruck in der Druckkammer 24 des Gasdruckfederelements 16 und der in der Kammer 33 herrschende Druck in einem Gleichgewicht, wobei der Schließkörper 29 über den Kolben 22 wieder in eine die Öffnung 31 verschließende Stellung bewegt wird. Der auf dem Kolben 52 lastende Gasdruck in dem Ventilgehäuse 6 bewegt den Kolben 52 in Richtung der Wand 28 und damit den Schließkörper 56 in eine die Gasablassöffnung verschließende Stellung. Hierbei wird das in dem Zwischenraum 72 befindliche Gas über eine an der Kolbenstange ausgebildete Entlüftungsleitung 74 an die Umgebung der Gasventilanordnung abgeleitet.

Da die erfindungsgemäße Gasventilanordnung die Möglichkeit schafft, einen daran angeschlossenen Raum in der oben beschriebenen Weise sowohl mit einem Druckgas zu befüllen als auch ein Druckgas aus diesem Raum abzulassen, wobei der Gasdruck in diesem Raum mittels der elektronischen Steuer- und Regeleinrichtung 40 beliebig einstellbar ist, kann sie besonders vorteilhaft zum Anblasen und Fluten der Regelzellen eines Unterseeboots eingesetzt werden. Hierzu ist die Gasventilanordnung typischerweise direkt eingangsseitig der Regelzellen in der Leitungsverbindung zu einer Druckgasquelle angeordnet. Zum Einstellen der Tauchtiefe und/oder zum Trimmen des Unterseeboots kann Druckgas mittels der Gasventilanordnung bei hoher Regelgenauigkeit in die Regelzellen eingeleitet werden, wodurch das dort befindliche Ballastwasser abgeblasen wird, oder die Regelzellen können durch eine Minderung des dort herrschenden Gasdrucks über das Gasablassventil 58 der Gasventilanordnung mit einer vorgegebenen zusätzlichen Menge Regelwasser gefüllt werden.

### Bezugszeichenliste

- 2 -: Zuführleitung
- 4 -: Strömungseinlass
- 6 -: Ventilgehäuse
- 8 -: Strömungsauslass
- 10 -: Absperrventil
- 12 -: Feder
- 14 -: Schließkörper
- 16 -: Gasdruckfederelement
- 18 -: Zylinder
- 20 -: Kolben
- 22 -: Kolben
- 24 -: Druckkammer
- 26 -: Kolbenstange
- 28 -: Wand
- 29 -: Schließkörper
- 30 -: Vorsprung
- 31 -: Öffnung
- 32 -: Leitung
- 33 -: Kammer
- 34 -: Absperrventil
- 35 -: Öffnung
- 36 -: Leitung
- 38 -: Absperrventil
- 40 -: Steuer- und Regeleinrichtung
- 42 -: Signalleitung
- 44 -: Signalleitung
- 46 -: Signalleitung
- 48 -: Drucksensor
- 50 -: Zylinder
- 52 -: Kolben
- 54 -: Kolbenstange
- 56 -: Schließkörper
- 58 -: Gasablassventil
- 60 -: Gasablassöffnung
- 62 -: Eingabeeinheit
- 64 -: Drucksensor
- 66 -: Signalleitung
- 68 -: Drucksensor
- 70 -: Signalleitung
- 72 -: Zwischenraum
- 74 -: Entlüftungsleitung
- A -: Strömungsrichtung
- B -: Strömungsrichtung

## Patentansprüche

1. Gasventilanordnung zum Einstellen und Regeln eines Drucks eines an der Gasventilanordnung angeschlossenen Raumes, mit einem mittels eines von einem Gasdruckfederelement (16) gesteuerten Absperrventils (10) abschließbaren Strömungseinlass (4) und mit einer Regeleinrichtung (40), welche den Gasdruck des Gasdruckfederelements (16) steuert, wobei eine erste Kolben-Zylinder-Anordnung das Gasdruckfederelement (16) bildet, in der ein erster Kolben (20) in einen ersten Zylinder (18) beweglich geführt ist und der Gasdruck des Gasdruckfederelements auf eine Kolbenfläche des ersten Kolbens (20) wirkt.

2. Gasventilanordnung nach Anspruch 1, bei der das Gasdruckfederelement (16) einen an einer Druckgasquelle angeschlossenen Gaseinlass (32) und einen in der Umgebung der Gasventilanordnung mündenden Gasauslass (36) aufweist und an dem Gaseinlass (32) und dem Gasauslass (36) jeweils ein von der Regeleinrichtung betätigtes Absperrventil (34, 38) angeordnet ist.

3. Gasventilanordnung nach Anspruch 2, bei der der Strömungseinlass (2) die Gasdruckquelle bildet.

4. Gasventilanordnung nach einem der vorangehenden Ansprüche, bei der ein vorzugsweise zur Umgebung der Gasventilanordnung öffnendes Gasablassventil (58) vorgesehen ist, das mit einem Strömungsauslass (8) der Gasventilanordnung leitungsverbunden ist.

5. Gasventilanordnung nach Anspruch 4, bei der das Gasablassventil (58) von dem Gasdruckfederelement (16) gesteuert ist.

6. Gasventilanordnung nach einem der Ansprüche 4 oder 5, bei der ein Schließkörper (56) des Gasablassventils (58) mit einer zweiten Kolben-Zylinder-Anordnung bewegungsgekoppelt ist und der Zylinder (50) der zweiten Kolben-Zylinder-Anordnung einen Strömungseinlass (31) aufweist, der mit einem mit dem Gasdruckfederelement (16) bewegungsgekoppelten Schließkörper (29) verschließbar ist.

7. Gasventilanordnung nach einem der vorangehenden Ansprüche, wobei an dem Strömungsauslass (8) und vorzugsweise vor dem Strömungseinlass (4) ein mit der Regeleinrichtung (40) signalverbundener Drucksensor (64, 68) angeordnet ist.

8. Gasventilanordnung nach einem der Ansprüche 2 bis 7, bei der die an dem Gaseinlass (32) und Gasauslass (36) des Gasdruckfederelements (16) angeordneten Absperrventile (34, 38) sowohl elektrisch als auch manuell betätigbar sind.

9. Gasventilanordnung nach einem der vorangehenden Ansprüche, bei der ausgangsseitig eine Regelzelle eines Unterseeboots angeschlossen ist.
